# EUROPEAN PATENT APPLICATION

(11) **EP 4 815 365 A1**
(43) Date of publication of application: **30.09.2026**
(21) Application number: 25305453.0
(22) Date of filing: 27.03.2025
(51) Int. Cl.: H04L 9/08, H04L 9/32

(54) **METHOD FOR A SECURE ELEMENT TO AUTHENTICATE A KEM-BASED SECURE CHANNEL WITH AN INTERFACE DEVICE**

(71) Applicant: THALES DIS FRANCE SAS, 92190 Meudon (FR)
(72) Inventor: FAHER, Mourad, 78160 Marly le Roi (FR); DEBOIS, Georges, 75013 Paris (FR)
(74) Representative: Quintero Romero, Manuel

(57) **Abstract**

The invention provides a method for binding a key encapsulation mechanism, KEM, keypair and a signing keypair belonging to a secure element, the method comprising:
• providing the KEM keypair and the signing keypair in the secure element; and
• providing a certificate for the signing keypair in the secure element, wherein the certificate comprises an identifier referencing to a part or all of the KEM keypair.

## Description

### TECHNICAL FIELD

This invention relates to the field of post-quantum cryptography, and more particularly to the communication between a secure element, e.g., Integrated Circuit Card, and an interface device, e.g., reader, improving security and privacy.

### BACKGROUND OF THE INVENTION

The increasing computational power of quantum computers is a growing threat to the security of classical signature protocols such as RSA or ECDSA. Such signature schemes will eventuality be defenceless against attacks performed using quantum computers. Therefore, signatures based on such legacy cryptography will not be reliable anymore. Using a quantum computer, an attacker would be able to discover the private key used to sign such certificates, which would enable him to e.g., issue fraudulent valid certificates.

Such signatures are used in everyday interactions between service provider devices, such as terminals or servers, and user devices, such as Integrated Circuit Card (ICC) or devices embedding secure elements (eSE), for e.g., handshaking or mutual authentication before any data is exchanged between these devices. To prevent attacks using quantum computers, quantum-safe cryptographic (QSC) protocols start being identified or designed.

For example, the Joint Technical Committee ISO/IEC JTC 1, *Information technology,* Subcommittee SC 17, *Cards and security devices for personal identification,* WG4 group, in charge of future evolutions of smartcards, currently investigates this situation and has recently released the ISO/IEC 7816-8:2021 AMD1:2023 setting the foundations for the upcoming security operations using QSC cryptography.

Among the available options, Key Encapsulation Mechanism, KEM, as per the references NIST SP 800-227, FIPS 203, etc. is being considered as quantum-attack resilient for the key establishment allowing two communicating parties to encrypt their messages sheltered from post-quantum attacks. Thus, KEM is aimed at replacing vulnerable legacy key exchange protocols.

Despite this protocol comes with several variances such as hybrid KEM, multi-algorithm KEM, composite KEM, etc., none offers built-in privacy and full security leaving these questions open for implementation and performance-enhancement.

Inventors have found that, in KEM-based secure channel establishment workflows, authentication stays separate from the key establishment itself and then a man-in-the-middle knowing the KEM-based shared secret, e.g., exploiting vulnerabilities, can impersonate any of the communicating parties. That is, the attacker can simply inject a replacing certificate once the KEM-based session is established miss-authenticating one of the parties.

This situation can be exploited by fraudsters using e.g., replay attacks, cloning attacks, or relay attacks; and, hence, there is a need in the industry, namely in the smartcard industry, for a privacy-enabling quantum-safe static-authenticated key establishment.

### SUMMARY OF THE INVENTION

The present invention provides a solution for all the aforementioned problems by a method for binding a KEM keypair and a signing keypair belonging to a secure element according to claim 1, a method for a secure element to authenticate a KEM-based secure channel with an interface device according to claim 8, a secure element according to claim 14, and a related system according to claim 15. In dependent claims, preferred embodiments of the invention are defined.

In a first inventive aspect, the invention provides a method for binding a key encapsulation mechanism, KEM, keypair and a signing keypair belonging to a secure element. The method comprises:
- providing the KEM keypair and the signing keypair in the secure element;
- providing a certificate for the signing keypair in the secure element, wherein the certificate comprises an identifier referencing to a part or all of the KEM keypair.

According to the invention, the secure element can be embodied as a standalone chip card or ICC; or as an embedded secure element eSE or integrated secure element iSE embedded/integrated in a user device such as smartphone, connected wearable, etc.

For instance, the device hosting the secure element can be an eMRTD such as a passport authenticating a border authority terminal before allowing it to access the identity information stored in the chip of the eMRTD. Similarly, it may be a national electronic identity document elD and the interface device, or reader, may be a government identity verification terminal. As another example, the secure element may be an embedded UICC (eUICC) and the reader may be a payment terminal authenticating to the eUICC before performing an NFC transaction. Alternatively, the secure element device may be an electronic health card, such as eEHIC, and the service provider device may be a healthcare practitioner terminal authenticating to the user device for accessing healthcare data of the user. As a last example, the secure element device may be a user computer or smartphone running a web browser or an application and the reader may be a web server to which the web browser or application connects and which must mutually authenticate with the secure element before the user device sends personal data, such as banking information or account credentials, to the web server.

According to the invention, the secure element comprises a KEM keypair (i.e., a KEM encapsulation key *ek* and a KEM decapsulation key *dk*)*,* a signing keypair (i.e., a public key *pk* and a secret key *sk*)*,* and a certificate for the signing keypair that advantageously comprises an identifier referencing to part or all of the KEM keypair, namely to the KEM encapsulation key (*ekinf*)*.* Then, right after KEM-based key establishment, the secure element can submit the certificate to the communicating party (hereinafter *interface device*) which has the equivalent KEM-based shared key in order to explicitly bind this authentication to the previous key-establishment-related exchanges.

Thus, in short, the invention binds the KEM keypair with the signing keypair thanks to the signing keypair certificate usable for authentication of the secure element. This certificate mainly comprises the signing public key *pk,* the identifier to the KEM keypair *ekinf,* and, optionally, a reference to the *subject* (e.g., a secure element unique identifier, and/or its owner). The identifier *ekinf* does not need to be the exact KEM encapsulation key but any kind of information (e.g., hashing, scramble, or any anonymous reference such as placeholder) enabling a communicating party to link it to a previous KEM encapsulation key received during the precent KEM-based shared key establishment. As usual, the certificate further contains a reference to the issuer and its signature (made by its own private key).

Advantageously, the method according to the invention builds-in privacy (e.g., anti-eavesdropping, and confidentiality because the certificate is transferred under secure messaging and can be known only to the interface device) and security (e.g., MITM attack easily detectable) to the existing quantum-safe resistant KEM-related protocols.

In addition, when the communication between the secure element and the interface device is based on ISO/IEC 7816-4 standard, the master-slave Application Protocol Data Unit, APDU-based protocol requires that the interface device sets the security context by sending some parameters {x} in order to initiate the session. Similarly, online communications e.g., through Transport Layer Security (TLS), also uses initialization parameters {x} (i.e., TLS-specific parameters) that can be used, according to the invention, to bind the authentication step to the initial TLS session (i.e., user login to the server hosting the interface device).

Advantageously, regardless if it is an online session (e.g., TLS) or an offline session (ISO/IEC 7816 spec.), these parameters {x} can be used during the key establishment and, later on, during the certificate authentication (e.g., signing these parameters together with a cipher appended to the certificate) in order to avoid replay attacks (e.g., session transcript in signature for unicity), and relay attacks (i.e., only the genuine owner owns the right ek and bound signing keypair certificate).

In a preferred embodiment, the KEM algorithm to be used for the mutual computation of shared secrets is a Module-Lattice-based Key-Encapsulation Mechanism, ML-KEM, as described in Federal Information Processing Standards Publication 203 (FIPS 203 published on August 13, 2024). ML-KEM is believed to be secure against adversaries who possess a quantum computer.

In a particular embodiment, the signing keypair is configured to use a quantum-safe cryptographic (QSC) protocol such as hash-based, lattices-based and multivariate-based cryptographic protocol. Preferably, the signing keypair algorithm is Module-Lattice-Based Digital Signature Standard, ML-DSA (also known as *Dilithium*) as per FIPS 204 standard.

In a particular embodiment, the KEM keypair and the signing keypair are static keypairs usable during more than one key establishment and authentication. Advantageously, the invention utilizes less processing time using static keypairs rather than generating ephemeral ones.

Alternatively, these keypairs can be generated on-the-fly by the secure element. That is, these keys can be a one-time-key or ephemeral keys. In further embodiments of the invention, ISO/IEC 7816 standard series has been extended to include an APDU command allowing to generate these keys on-board the secure element: Generate Asymmetric Key Pair, GAKP, APDU command. In a particular embodiment, the identifier referencing to a part or all of the KEM keypair is also generated on-board by the secure element.

Thus, in a particular embodiment, the signing certificate is a X.509v3 certificate further comprising a reference to the algorithm used to generate ekinf. Alternatively or additionally, the interface device already knows the pre-established algorithm that was used for creating the ekinf and hence knows how to make the link between ek and ekinf.

Besides, regarding performance, the signature for authentication can be operated on the secure element with less non-volatile memory provided that the keys are generated out of a seed (see e.g., FIPS 203 and FIPS 204).

In a particular embodiment, the certificate binding the KEM and signing keypairs lacks a subject. Additionally, or alternatively, the identifier referencing to the KEM keypair is obfuscated (or scrambled).

Advantageously, this strengthens privacy (e.g., data minimization) since the authentication certificate only contains very few information about an "anonymous" subject holding the certificate, that can be fine-grained depending on the desired level of anonymity. That is, the certificate can contain the full subject data, can only contain a reference to how the certificate was built (e.g., issuer's details), the subject be obfuscated, or even being absent.

The goal is to hinder that the interface device can devise the usage of the certificate and hence link or collude activities at its side.

In this regard, in a particular embodiment, the secure element comprises a plurality of KEM keypairs and/or signing keypairs to be used during session establishment and subsequent authentication with an interface device.

Preferably, the secure element comprises a plurality of KEM keypairs and hence the signing keypair certificate comprises a series of identifiers for each KEM keypair. Accordingly, to prevent linkability, these identifiers are preferably obfuscated so that the interface device is only aware of them when those associated KEM encapsulation keys are indeed disclosed by the secure element during key establishment.

Alternatively, the secure element comprises a series of certificates, each binding one specific KEM keypair with one specific signing keypair. In addition, there can be variances on these certificates binding the same KEM keypair(s) with signing keypair(s), as the certificate's subject can be explicit, obfuscated, or absent. In other words, the secure element can store these various certificates and use them as needed.

In a second inventive aspect, the invention provides a method for a secure element to authenticate a KEM-based secure channel with an interface device, wherein the secure element comprises a KEM keypair with a KEM encapsulation key (ek) and a KEM decapsulation key (dk), a signing keypair with a public key (pk) and a secret key (sk), and a certificate for the signing keypair comprising an identifier referencing to the KEM encapsulation key (ekinf). The method comprises the steps of:
- sending, by the secure element, the KEM encapsulation key (ek) to the interface device,
- computing, by the interface device, an encapsulation mechanism using the received KEM encapsulation key, outputting a cipher (c) and a shared secret (Kb);
- sending, by the interface device, the cipher (c) to the secure element, which in turn computes a decapsulation mechanism using the KEM decapsulation key (dk) and the received cipher (c) outputting a shared secret (Ka) equivalent to the shared secret of the interface device;
- signing, by the secure element, at least the cipher (c) using the secret key (sk), and sending this signature and the certificate to the interface device which extracts, at least, the cipher (c) and the identifier (ekinf), and matches them with the cipher (c) and KEM encapsulating key (ek) from the KEM-based secure channel establishment.

In a preferred embodiment, the communication between the secure element and the interface device is based on ISO/IEC 7816 standard series. In particular, some APDUs are specified in part-8 and some others in part-4.

In a particular embodiment, the secure element generates on-onboard the KEM keypair (ek, dk) and the signing keypair (pk, sk), and stores the certificate for the signing keypair comprising the identifier referencing to the KEM encapsulation key (ekinf). Additionally, the secure element generates onboard the identifier referencing to the KEM encapsulation key. In a particular embodiment, an external signing certification authority endorsing the signing keypair of the secure element, or a delegatee, makes the link between the signing public key (pk) and the KEM encapsulation key identifier (ekinf) accessible and consultable by the interface device.

In a particular embodiment, the secure element comprises a plurality of KEM keypairs (ek#n,dk#n). The certificate then comprises a series of identifiers for each KEM keypairs (ekinf#n) or comprises a generic identifier referencing to the KEM encapsulation key. Preferably, the identifiers for each KEM keypairs (ekinf#n) are stored in the certificate in an obfuscated form.

Alternatively, the secure element comprises a series of certificates, each binding one specific KEM keypair with one specific signing keypair.

In a third inventive aspect, the invention provides a secure element configured to authenticate a KEM-based secure channel established with an interface device, wherein the secure element comprises
- a KEM keypair with a KEM encapsulation key (ek) and a KEM decapsulation key (dk);
- a signing keypair with a public key (pk) and a secret key (sk); and
- a certificate for the signing keypair comprising an identifier referencing to the KEM encapsulation key (ekinf).

In a fourth inventive aspect, the invention provides a system for authenticating a KEM-based secure channel between a secure element and an interface device. The system comprises:
- the secure element comprising a KEM keypair with a KEM encapsulation key (ek) and a KEM decapsulation key (dk), a signing keypair with a public key (pk) and a secret key (sk), and a certificate for the signing keypair comprising an identifier referencing to the KEM encapsulation key (ekinf), the secure element being configured to:
   ∘ send the KEM encapsulation key (ek) to the interface device,
   ∘ receive a cipher (c) from the interface device,
   ∘ compute a decapsulation mechanism using the KEM decapsulation key (dk) and the received cipher (c) outputting a shared secret (Ka);
   ∘ sign at least the cipher (c) using the secret key (sk),
   o encrypting this signature and the certificate using the shared secret (Ka), and
   o send the encrypted signature and certificate to the interface device;
- the interface device configured to
   o compute an encapsulation mechanism using the KEM encapsulation key from the secure element outputting a cipher (c) and a shared secret (Kb),
   ∘ send the cipher (c) to the secure element,
   ∘ receive the encrypted signed cipher (c) and certificate from the secure element, and decrypt them using the shared key (Kb),
   ∘ extract the cipher (c) and the identifier (ekinf) and match them respectively with the cipher (c) and KEM encapsulating key (ek) from the KEM-based secure channel establishment, and
   ∘ if match is successful, authenticating the secure element with which the KEM-based secure channel was established.

Namely, both the secure element and the interface device uses their respective shared secrets (identical) to generate session symmetric keys e.g., through a Key Derivation Function (KDF).

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Fig. 1: schematically illustrates an interface device according to an embodiment of the present invention.
- Fig. 2: schematically illustrates a secure element according to an embodiment of the present invention.
- Fig. 3: shows an APDU-based communication between the secure element and the
interface device for key establishment and authentication according to embodiments of the invention.

### DETAILED DESCRIPTION OF THE INVENTION

As it will be appreciated by one skilled in the art, aspects of the present invention may be embodied as method steps, as a system, or as a secure element.

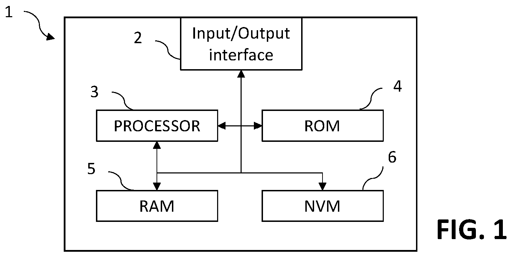

In **figure 1**, it is depicted an interface device 1 that includes a processor 3 connected via a bus to a random-access memory (RAM) 5, a read-only memory (ROM) 4, and/or a non-volatile memory (NVM) 6 and an input/output interface 2.

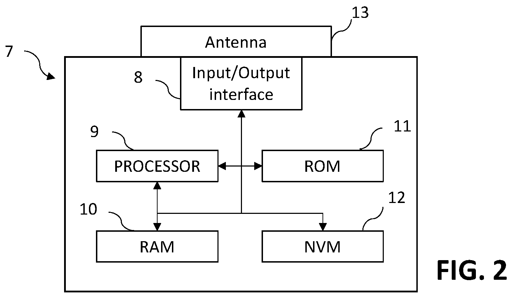

In **figure 2****,** it is depicted a secure element 7 including a processor 9 connected via a bus to a random-access memory (RAM) 10, a read-only memory (ROM) 11, and/or a non-volatile memory (NVM) 12 and an input/output interface 8.

The reader 1 and the secure element 7 are connected by a communication link. Such a communication link may be a wired communication link. In such a case the input/output interface 8 is an ISO/IEC 7816 interface. Alternatively, such a communication link may be a wireless communication link. In such a case, the input/output interface may be a short-range communication interface such as NFC, or a longer-range communication interface such as 3G, 4G or 5G broadband communication cellular network communication interfaces. In such a case, the device hosting the secure element may further include an antenna 13 connected to the input/output interface. The secure element may be embedded or integrated into a host device comprising a wireless communication interface, such as a smartphone, and this communication link between the secure element and the reader may be set through the communication interface of the host device.

The reader 1 may also be connected to a trusted third-party device (not shown) by a further communication link.

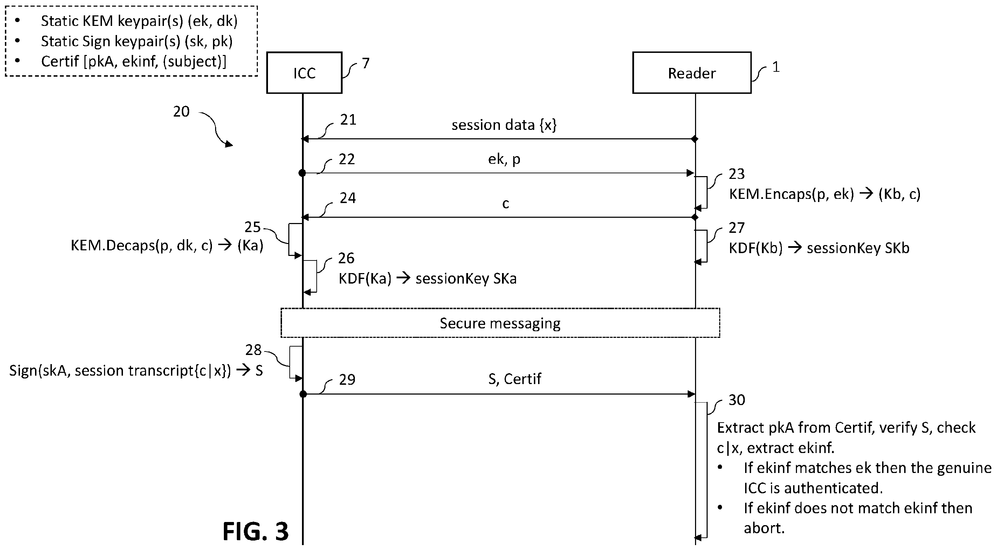

In **figure 3**, it is depicted an example of an APDU-based communication 20 between the secure element and the interface device for key establishment and authentication according to the invention. For illustrative purposes, the secure element is embodied as an ICC communicating with the interface device, e.g., a reader, through ISO/IEC 7816 -compliant manner. Alternatively to this direct ICC-reader communication, the secure element can be hosted in a mobile phone and hence enable online communication e.g., through Transport Layer Security (TLS).

As a basis, it is considered that the personalized ICC comprises (i.e., securely stores):
- a KEM keypair with a KEM encapsulation key ek and a KEM decapsulation key dk,
- a signing keypair with a public key pk and a secret key sk, and
- a certificate, preferably a QSC certificate, for the signing keypair comprising the signing public key *pk,* an identifier to the KEM keypair *ekinf* (e.g., hash), and, optionally, a reference (explicit or obfuscated) to the *subject* (e.g., a secure element unique identifier, and/or its owner).

Alike any slave ICC, the master reader will start the session by setting the security context, i.e., sending 21 one or more parameters {x} related to the ongoing session.

Then, the ICC retrieves and transmits 22 the KEM encapsulation key ek together with, preferably, a probabilistic algorithm indicator p. Nevertheless, this probabilistic algorithm indicator may be known beforehand by both parties and not necessarily transmitted, e.g., part of the known domain parameters e.g., it can be implicit.

The interface device receives ek and p, and computes 23 an encapsulation mechanism using these components as inputs. The encapsulation mechanism outputs a cipher *c* and a shared secret Kb. This shared secret will be used later on for secure messaging with the ICC.

The interface device keeps the shared secret Kb but sends back 24 the cipher c to the ICC, which in turn computes 25 a decapsulation mechanism using mainly its KEM decapsulation key dk and the received cipher c outputting a shared secret Ka which is equivalent to the shared secret Kb obtained by the interface device. If the probabilistic algorithm indicator p was inputted by the interface device during the encapsulation mechanism, this parameter must be also used during the decapsulation mechanism by the ICC.

Now, the ICC and the interface device both posses the same shared secret that can be used to generate symmetric keys and start securely exchanging messages. Namely, the shared secrets are further passed 26, 27, by each of the communicating parties, through a Key Derivation Function (KDF) to generate the same session keys SKa, SKb.

Once the parties can start securely exchanging messages, the ICC needs to authenticate itself in a way that it can attest it was the party engaged during previous key establishment. To do so, according to the invention, the ICC uses its certificate that binds the signing keypair with the KEM keypair.

The ICC uses its secret key sk to sign 28 at least the cipher c and sends 29 this resulting signature S together with the certificate to the interface device. At this point, the ICC can strengthen the security of the transaction by also signing a session transcript with some or all of the parameters {x} initially shared by the interface device. Therefore, the signature S contains a signed session transcript appended to the cipher c.

Adding signatures allows non-deniability properties, while adding the session transcript and cipher prevents undesirable replay attacks.

This guarantees that in case of an intrusion of an attacker that didn't participate in the key establishment of the secure session, it becomes evident, as he/she will use other session transcript and/or other cipher c. In other words, using at least the cipher *c* in the generation of the signature S allows confirming the involved parties are the same as per during secure messaging establishment.

The interface device extracts 30, at least, the cipher c and the identifier ekinf, and matches them with the cipher c and KEM encapsulating key ek from the KEM-based secure channel establishment.

More particularly, the interface device extracts the public key pk from the certificate, verifies the signature S, check the cipher c e.g., concatenated with any {x} parameters related to session transcript. If everything matches, the interface device further extracts the identifier of the KEM encapsulation key ekinf and associates it with the previously received ek. If it ascertains that both are related, the interface device confirms that the certificate coming along with this new signature is bound to the ek involved during key establishment.

As mentioned, *ekinf* can be embodied in different formats e.g., a hash of the ek alone, a hash of ek concatenated with e.g., some secure element specific value to prevent cloning of signing keypair (sk, pk) and KEM keypair (ek, dk), etc. These hashes can be obtained by applying a predetermined hash function to the ek content, such as MD5, SHA1, SHA2, SHA3 or SHAKE. ekinf can be as well an anonymous reference or placeholder.

In some embodiments, the ekinf is generated by the secure element according to an algorithm that can be known explicitly to both the secure element and the interface device through a specific algorithm identifier, or known implicitly (i.e., pre-established). That is, at generation time, the signing public key pk may be nested in a template comprising at least pk and ekinf, and returned by the secure element for certification purposes.

Accordingly, in a particular embodiment, the interface device can guess the nature of ekinf (how it was built-up) through e.g., the algorithm identifier that can be referenced in the signing keypair certificate as part of its extensions (i.e., for X.509v3 certificate) or by the pre-established, implicit, one. Thus, in a particular embodiment, the signing certificate is a X.509v3 certificate further comprising a reference to the algorithm used to generate ekinf.

Alternatively or additionally, the interface device can also make the link between ekinf and ek through an external repository (e.g., safeguarded by the issuer or a delegatee) indexing ekinf and its associated ek, in which case, ekinf can be a simple opaque index of reference or indirection.

Optionally, if the certificate further comprises a *subject* (explicit or obfuscated), the interface device can also authenticate the ICC. Depending on the use case, the interface device may also authenticate to the ICC before resuming transaction workflows.

Briefly, the interface device cannot know to whom it is talking. Whoever unfolds this KEM-based protocol can authenticate itself, impersonating the ICC, without any hint from the interface device. Only once the certificate-based authentication takes place (i.e., interface device successfully runs all the checks), it can ascertain that the ICC is genuine.

However, the repetitive use of the same KEM keypair may bring forth linkability issues. That is, interface devices and other readers may track or guess ICC activities by looking at their past transactions or colluding their respective records. Therefore, in a further embodiment of the invention, the ICC comprises a plurality of KEM keypairs (ek#1, dk#1), (ek#2, dk#2), ..., (ek#n, dk#n). These KEM keypairs can be either pre-provisioned into the ICC (e.g., at personalization or patching), simply diversified from loaded master keys, or generated on-onboard when necessary (i.e., "on-the fly").

Once again, this KEM keypair does not need to be associated with a certificate as the corresponding certificate is not delivered to the interface device.

As mentioned before, the signing keypair (sk, pk) indeed come with a certificate because it is shared with interface device during ICC authentication. Preferably, this pk certificate is endorsed by a QSC Certification Authority signature e.g., see hybrid certificate in ISO/IEC 7816-8:2021/Amd.1/2023, Annex B. This signing keypair can be also generated on-board by the ICC and the associated certificate provisioned / generated as usual.

To strengthen privacy, the ICC can generate or load multiple signing keypairs that can be (e.g., randomly) mapped to different KEM keypairs in order to introduce their ekinfs into the certificate. This map can be 1-to-1 or 1-to-N, and for the same group of signing-KEM keypairs, the certification authority may issue different certificates. For instance, it can issue 3 certificates: one with the explicit subject, one with an obfuscated subject, and one anonymous. Therefore, the ICC can decide (e.g., hardcoded or in agile mode) which certificate to use depending on the context (e.g., interface device), number of certificates left unused, number of fresh KEM keypairs, etc.

In case a single certificate comprises the identifiers of multiple KEM encapsulation keys, these identifiers are preferably obfuscated so that the interface device cannot easily trace them. In a further improvement, a single certificate linked to various KEM keypairs can contain a generic identifier to all of them.

In an enabling example, when the certificate comprises multiple (obfuscated) ekinfs, the certificate nests the list of ekinfs indexed by respective digital identifier and hashed after being concatenated with e.g., a random. The secure element can return to the interface device the certificate alongside the ekinf value and the random that was used to randomize the ekinf for obfuscation purposes, and the digital identifier of this ekinf in the list of ekinfs. Accordingly, the interface device knowing the digital identifier, can look up its position in the list and rehash it after concatenation with the random, then insert it in its place amongst the rest of hashed ekinfs, and recompute the global hash and verify that it matches with the global hash signed within the certificate by issuer. If it matches, the interface device draws the conclusion that the received ekinf is a genuine one asserted by the certificate containing the list of ekinfs. For completeness, an equivalent method has been specified in ISO/IEC 18013-5 regarding selective disclosure of data elements, so the present invention may reuse its principles for ekinf disclosure.

In a particular embodiment, the certification authority endorsing the signing keypair of the ICC, or a delegatee, can render the link between e.g., the signing public key pk and the KEM encapsulation key identifier ekinf accessible and consultable by the interface device.

As explained hereinabove, the interface device does not need to share the ekinf with the issuer since this may infringe privacy rules. Instead, in a preferred embodiment, the interface device relies on selective disclosure principles for the ekinf, or a list of obfuscated ekinfs. Hence, if really needed, the interface device needs only to check in this repository that the ekinf is indeed a reference or index to look up the key ek.

The generation of keys on-board the ICC is something standardised in ISO/IEC 7816-8 but, as per today, the APDU command GAKP is unfortunately limited to the generation of one specific keypair for one specific role. Hereinafter it is provided an example of how the ICC can generate on-board KEM keypairs and signing keypairs.

GENERATE ASSYMETRIC KEY PAIR Command-Response Pair :
Command data field:
'A6' - L - { {'83' - L - <reference of a KEM encapsulation key ek >} {'80' - L - <cryptographic mechanism reference>}{<'97'-L-<order of operation='01'>} }
'A4' - L - { {'83' - L - <reference of a public key pk>} {'80'- L - <cryptographic mechanism reference>}{'9A'-L-<binding data= DO'83' Value>}{<'97'-L-<order of operation='02'>}{'4D' - '03' - ('7F75' - '80')} }

The first generated key is intended for KEM-based key establishment or key agreement, i.e., DO'A6' as KAT (KAT meaning "control reference template for key agreement").
- DO'83' in KAT indicates reference of a public key (i.e., KEM encapsulation key ek).
- DO'80' in KAT indicates cryptographic mechanism reference e.g., ML-KEM derived from CRYSTALS-KYBER scheme.
- DO'97' in KAT indicates the order of the operation denoted by DO'80' i.e., key establishment first.
- KAT does not contain DO'4D' as extended header list since the KEM encapsulation key does not present its certificate to an interface device for quantum-safe static authenticated key establishment; optionally DO'4D' may be present as e.g., {'4D' - '03' - ('7F75' - '80')} for ML-KEM.

The second generated key is intended for authentication (DO'A4' as AT). While key usage shall indicate Digital Signature in X.509v3 certificate extensions for pk, the related Extended Key Usage shall denote Client Authentication as exclusive purpose of the key.

Alternatively, it can be CRT DST (DO'B6'), CRT DST meaning "control reference template for digital signature".
- DO'83' in AT indicates reference of a public key.
- DO'9A' in AT indicates the reference (i.e., DO'83') from which some data shall be derived (i.e., ekinf) in an application-specific way (out of scope) to bind the QSC certificate authentication key with the key establishment.
- DO'97' in AT indicates the order of the operation denoted by DO'80' i.e., authentication follows key establishment.
- AT contains DO'4D' as extended header list to allow for certification of authentication key.
- Format of extracting public key data is QSC public key template DO'7F75' where whole public key data extracting is indicated ('80').

Response data field:

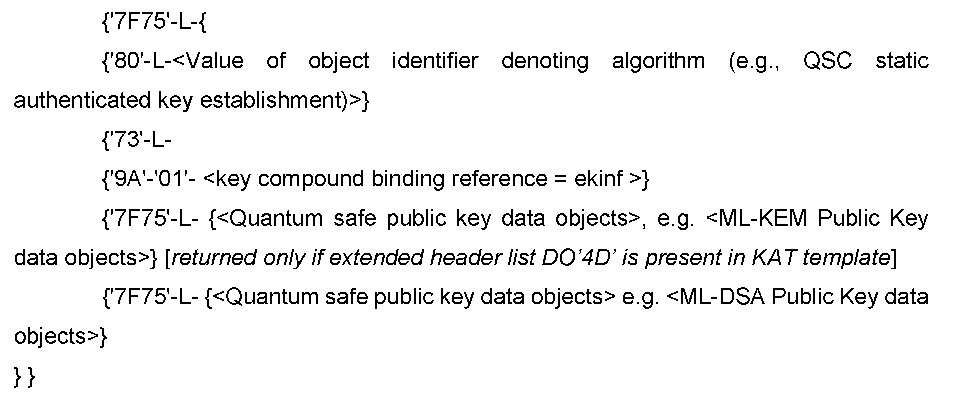

## Claims

1. A method for binding a key encapsulation mechanism, KEM, keypair and a signing keypair belonging to a secure element, the method comprising:
• providing the KEM keypair and the signing keypair in the secure element;
• providing a certificate for the signing keypair in the secure element, wherein the certificate comprises an identifier referencing to a part or all of the KEM keypair.

2. The method according to claim 1, wherein the signing keypair is configured to use a quantum-safe cryptographic protocol such as hash-based, lattices-based and multivariate-based cryptographic protocol.

3. The method according to any of claims 1 or 2, wherein the KEM keypair and/or the signing keypair is a static keypair or a keypair generated on-the-fly by the secure element.

4. The method according to claim 3, wherein the identifier referencing to a part or all of the KEM keypair is also generated on-board by the secure element.

5. The method according to any of claims 1 to 4, wherein the certificate binding the KEM and signing keypairs lacks a subject, and/or the identifier referencing to the KEM keypair is obfuscated.

6. The method according to any of claims 1 to 5, wherein the secure element comprises a plurality of KEM keypairs and/or signing keypairs to be used during session establishment and subsequent authentication with an interface device.

7. The method according to any of claims 1 to 6, wherein the secure element is one of at least: an integrated circuit card, an embedded secure element or an integrated secure element.

8. A method for a secure element to authenticate a KEM-based secure channel with an interface device, wherein the secure element comprises a KEM keypair with a KEM encapsulation key (ek) and a KEM decapsulation key (dk), a signing keypair with a public key (pk) and a secret key (sk), and a certificate for the signing keypair comprising an identifier referencing to the KEM encapsulation key (ekinf), the method comprising the steps of:
• sending, by the secure element, the KEM encapsulation key (ek) to the interface device,
• computing, by the interface device, an encapsulation mechanism using the received KEM encapsulation key, outputting a cipher (c) and a shared secret (Kb);
• sending, by the interface device, the cipher (c) to the secure element, which in turn computes a decapsulation mechanism using the KEM decapsulation key (dk) and the received cipher (c) outputting a shared secret (Ka) equivalent to the shared secret of the interface device;
• signing, by the secure element, at least the cipher (c) using the secret key (sk), and sending this signature and the certificate to the interface device which extracts, at least, the cipher (c) and the identifier (ekinf), and matches them with the cipher (c) and KEM encapsulating key (ek) from the KEM-based secure channel establishment.

9. The method according to claim 8, wherein the communication between the secure element and the interface device is based on ISO/IEC 7816 standard series.

10. The method according to any of claims 8 or 9, wherein the secure element generates on-onboard the KEM keypair (ek, dk), the signing keypair (pk, sk), and the identifier, and stores the certificate for the signing keypair comprising the identifier referencing to the KEM encapsulation key (ekinf).

11. The method according to any of claims 8 to 10, wherein an external signing certification authority endorsing the signing keypair of the secure element, or a delegatee, makes the link between the signing public key (pk) and the KEM encapsulation key identifier (ekinf) accessible and consultable by the interface device.

12. The method according to any of claims 8 to 11, wherein the secure element comprises a plurality of KEM keypairs (ek#n,dk#n), wherein the certificate comprises a series of identifiers for each KEM keypairs (ekinf#n) or comprises a generic identifier referencing to the KEM encapsulation key.

13. The method according to claim 12, wherein the identifiers for each KEM keypairs (ekinf#n) are stored in the certificate in an obfuscated form.

14. A secure element configured to authenticate a KEM-based secure channel established with an interface device, wherein the secure element comprises
• a KEM keypair with a KEM encapsulation key (ek) and a KEM decapsulation key (dk);
• a signing keypair with a public key (pk) and a secret key (sk); and
• a certificate for the signing keypair comprising an identifier referencing to the KEM encapsulation key (ekinf).

15. A system for authenticating a KEM-based secure channel between a secure element and an interface device, wherein the system comprises:
• the secure element comprising a KEM keypair with a KEM encapsulation key (ek) and a KEM decapsulation key (dk), a signing keypair with a public key (pk) and a secret key (sk), and a certificate for the signing keypair comprising an identifier referencing to the KEM encapsulation key (ekinf), the secure element being configured to:
o send the KEM encapsulation key (ek) to the interface device,
o receive a cipher (c) from the interface device,
o compute a decapsulation mechanism using the KEM decapsulation key (dk) and the received cipher (c) outputting a shared secret (Ka);
o sign at least the cipher (c) using the secret key (sk),
o encrypting this signature and the certificate using the shared secret (Ka), and
o send the encrypted signature and certificate to the interface device;
• the interface device configured to
o compute an encapsulation mechanism using the KEM encapsulation key from the secure element outputting a cipher (c) and a shared secret (Kb),
∘ send the cipher (c) to the secure element,
∘ receive the encrypted signed cipher (c) and certificate from the secure element, and decrypt them using the shared key (Kb),
∘ extract the cipher (c) and the identifier (ekinf) and match them respectively with the cipher (c) and KEM encapsulating key (ek) from the KEM-based secure channel establishment, and
∘ if match is successful, authenticating the secure element with which the KEM-based secure channel was established.
